# EUROPÄISCHE PATENTSCHRIFT

(11) **EP 1 612 446 B1**
(45) Veröffentlichungstag und Bekanntmachung des Hinweises auf die Patenterteilung: **05.11.2008**
(21) Anmeldenummer: 05012849.5
(22) Anmeldetag: 15.06.2005
(51) Int. Cl.: F16D 48/06, F16D 29/00

(54) **Verfahren zum Abgleichen einer Inkrementalwegmesseinrichtung in einer Betätigungsvorrichtung einer zugedrückten Kupplung sowie Betätigungsvorrichtung**
Calibrating method for a incremental displacement measuring device used in actuators for clutches closed by pressure and actuator of this kind.
Procédé pour calibrer un dispositif de mesure de déplacement incrémental utilisé en actionneur d'embrayage fermé par pression et un tel actionneur.

(30) Priorität: 30.06.2004 DE 102004031481
(43) Veröffentlichungstag der Anmeldung: 04.01.2006
(73) Patentinhaber: LuK Lamellen und Kupplungsbau Beteiligungs KG, 77815 Bühl (DE)
(72) Erfinder: Baehr, Markus, Dr., 77855 Achern (DE); Rieger, Christian, 76476 Bischweier (DE); Gerhart, Jürgen, 77767 Appenweier (DE); Jäggle, Gerd, 77880 Sasbach (DE); Berger, Reinhard, Dr., 77815 Bühl (DE)

(56) Entgegenhaltungen:
- DE-A1- 4 433 825
- DE-A1- 10 308 719
- DE-A1- 19 723 393

## Beschreibung

Die Erfindung betrifft ein Verfahren zum Abgleichen einer Inkrementalwegmesseinrichtung in einer Betätigungsvorrichtung einer zugedrückten Kupplung sowie eine Betätigungsvorrichtung für eine zugedrückte Kupplung.

Automatisierte Kupplungen finden ebenso wie automatisierte Getriebe nicht nur wegen der Komfortverbesserung, sondern auch wegen dadurch möglicher Verbrauchssenkungen zunehmend Verwendung in Kraftfahrzeugen. Konventionelle Kupplungen enthalten eine Tellerfeder, die die Kupplung im eingerückten Zustand hält. Die Kupplung muss von einer Betätigungseinrichtung gegen die Kraft der Tellerfeder ausgerückt werden. Insbesondere durch die Verwendung von genau steuerbaren Elektromotoren ist es in neuerer Zeit möglich, die starke Tellerfeder, die die Kupplung zudrückt, zu eliminieren und die Kupplung mit Hilfe der externen Betätigungsvorrichtung zu zudrücken. Die Kupplung kann auf diese Weise leichter ausgebildet werden. Damit die Kupplung sicher vollständig öffnet, können in ihr schwache Öffnungsfedern enthalten sein.

Insbesondere elektromotorische Betätigungsvorrichtungen für automatisierte Kupplungen enthalten häufig einen Spindeltrieb, in dem die Drehung einer vom Elektromotor angetriebenen Spindel in eine Bewegung eines Betätigungsgliedes für die Kupplung umgesetzt wird. Die Drehung der Spindel wird von einem Inkrementalsenor erfasst, der nach jeweils einem vorbestimmten Drehwinkel einen Impuls abgibt, der in einem Steuergerät gezählt wird. Da für eine genau Steuerung der Kupplung die Stellung des Betätigungsgliedes absolut bekannt sein muss, muss die Betätigungsvorrichtung bedarfsweise abgeglichen werden, d. h. der Zählstand des Inkrementalsensors muss einer vorbestimmten Stellung des Bewegungsgliedes zugeordnet werden. Dies geschieht bei einer Betätigungsvorrichtung gemäß der DE 443 38 25 C2 dadurch, dass unter Antrieb des Elektromotors Anschläge angefahren werden, von denen einer der voll geöffneten Stellung der Kupplung entspricht und der andere der voll geschlossenen Stellung. Das Erreichen des Anschlags wird jeweils sensiert, so dass der dabei vorhandene Zählstand der Impulse des Inkrementalsensors als Bezugs- bzw. Referenzstand genommen werden kann.

Der Erfindung liegt die Aufgabe zu Grunde, ein einfach durchführbares Verfahren zum Abgleichen einer Inkrementalwegmesseinrichtung in einer Betätigungsvorrichtung einer zugedrückten Kupplung anzugeben. Der Erfindung liegt weiter die Aufgabe zu Grunde, eine Betätigungsvorrichtung für eine zugedrückte Kupplung anzugeben, mit der ein solches Verfahren durchführbar ist.

Eine erste Lösung der Erfindungsaufgabe wird mit einem Verfahren zum Abgleichen einer Inkrementalwegmesseinrichtung in einer Betätigungsvorrichtung einer zugedrückten Kupplung erzielt, wobei die Betätigungsvorrichtung einen Aktor enthält, dessen Stellung von einem Inkrementalsensor erfasst wird und der mit einem Geberkolben verbunden ist, der über eine Hydraulikstrecke mit geberkolbenseitiger Schnüffelbohrung mit einem Nehmerkolben verbunden ist, der die Kupplung betätigt, welches Verfahren folgende Schritte enthält:
Erfassen der Kraft, die der Aktor zum Bewegen des Geberkolbens benötigt,
Erfassen des Ausgangssignals des Inkrementalsensor zu dem Zeitpunkt, zu dem sich die Kraft bei Überfahren der Schnüffelbohrung durch den Geberkolben sprunghaft ändert und
Festlegen des Ausgangssignals des Inkrementalsensors zum Zeitpunkt der sprunghaften Änderung als neues Referenzsignal.

Bevorzugt enthält die Betätigungseinrichtung einen Elektromotor, der mit dem Geberkolben über einen selbsthemmenden Spindeltrieb verbunden ist und die Bewegung des Geberkolbens in Schließrichtung der Kupplung von einer Kompensationsfeder unterstützt wird, bei welchem Verfahren die sprunghafte Änderung der Kraft nur bei einer Bewegung des Geberkolbens in Öffnungsrichtung der Kupplung erfasst wird.

Eine Betätigungseinrichtung für eine zugedrückte Kupplung, mit der die vorgenannten Verfahren durchführbar sind, enthält einen Elektromotor zum Bewegen eines Geberkolbens, der über eine Hydraulikstrecke mit geberkolbenseitiger Schnüffelbohrung mit einem Nehmerkolben verbunden ist, der die Kupplung betätigt,
einen selbsthemmenden Spindeltrieb zum Umwandeln einer Drehung der von dem Elektromotor angetriebenen Spindel in eine lineare Bewegung des Geberkolbens, einen Inkrementalsensor zum Erfassen der Drehung der Spindel,
eine Kompensationsfeder, die eine Bewegung des Geberkolbens in Schließrichtung der Kupplung unterstützt,
eine Steuereinrichtung, die die Leistungsaufnahme des Elektromotors beim Bewegen des Geberkolbens erfasst, mit dem Inkrementalsensor verbunden ist und eine Speichereinrichtung aufweist, die das Signal des Inkrementalsensors bei einer sprunghaften Änderung der Leistungsaufnahme, wenn der Geberkolben die Schnüffelbohrung (34) überfährt, als Referenzsignal speichert.

Vorteilhafterweise ist die zugedrückte Kupplung in Öffnungsrichtung vorgespannt und der Öffnungshub der Kupplung durch einen Anschlag begrenzt.

Bei einem weiteren Verfahren zum Abgleichen einer Inkrementalwegmesseinrichtung in einer Betätigungsvorrichtung einer zugedrückten Kupplung, mit der die Erfindungsaufgabe gelöst wird, enthält die Betätigungsvorrichtung einen mit Leistung beaufschlagbaren Aktor, dessen Stellung von einem Inkrementalsensor erfasst wird und der mit einem Betätigungsglied für die Kupplung verbunden ist, wobei das Betätigungsglied von einer der Vorspanneinrichtung derart in Öffnungsrichtung der Kupplung vorgespannt ist, dass es bei leistungslosem Aktor in Anlage an einen ortsfesten Anschlag gedrängt wird, welches Verfahren folgende Schritte enthält:
Leistungslos Schalten des Aktors
Erfassen des Stehenbleibens des Betätigungsgliedes und
Festlegen des Ausgangssignals des Inkrementalsensors zum Zeitpunkt des Stehenbleibens des Betätigungsgliedes als neues Referenzsignal.

Bevorzugt ist der Aktor ein Elektromotor, der eine Spindel antreibt, die mit dem Betätigungsglied in nichthemmendem Gewindeeingriff ist, und erfasst der Inkrementalsensor die Drehung der Spindel.

Eine Betätigungseinrichtung für eine zugedrückte Kupplung, mit der die beiden vorgenannten Verfahren durchführbar sind, enthält einen Elektromotor zum Drehantreiben einer Spindel, ein Betätigungsglied zum Betätigen der Kupplung, das mit der Spindel in nichthemmenden Gewindeeingriff ist, und
einen Inkrementalsensor zum Erfassen der Drehung der Spindel,
eine Vorspanneinrichtung, die das Betätigungsglied derart in Öffnungsrichtung der Kupplung vorspannt, dass es sich bei stromlosem Motor unter Drehung der Spindel gegen einen ortsfesten Anschlag bewegt,
eine Steuereinrichtung, die den Elektromotor steuert, mit dem Inkrementalsensor verbunden ist und eine Speichereinrichtung aufweist, die das Signal des Inkrementalsensors bei stromlosem Elektromotor und einen Stillstand der Spindel erfassenden Inkrementalsenor als Referenzsignal speichert.

Der Erfindung wird im folgenden anhand schematischer Zeichnungen beispielsweise und mit weiteren Einzelheiten erläutert.

In den Figuren stellen dar:
Fig. 1 eine erste Ausführungsform einer Betätigungseinrichtung für eine zugedrückte Kupplung in Prinzipdarstellung,
Fig. 2 Kraft-Weg-Kurven zur Erläuterung der Funktionsweise der Betätigungseinrichtung der Figur 1,
Fig. 3 eine Prinzipdarstellung einer weiteren Ausführungsform einer erfindungsgemäßen Betätigungseinrichtung, und
Fig. 4 Kraft-Weg-Kurven zu Erläuterung der Funktion der Betätigungseinrichtung gemäß Figur 3.

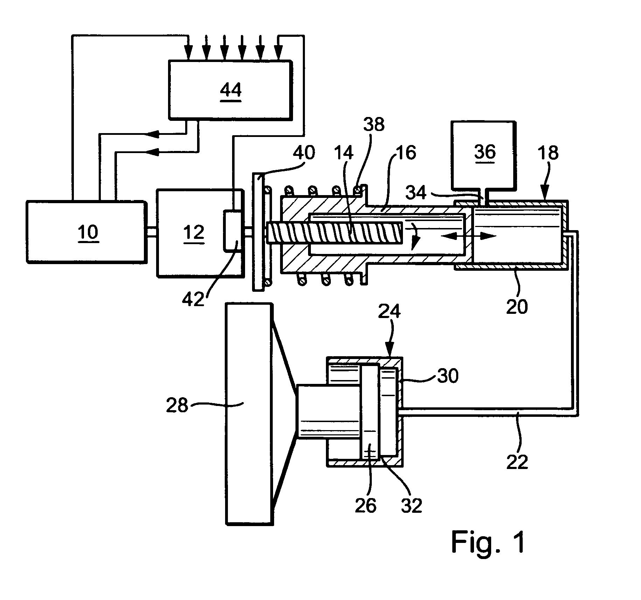

Gemäß Figur 1 ist ein Elektromotor 10 mit einem Getriebe 12 verbunden, dessen Ausgangswelle in einer Spindel 14 endet, die in Gewindeeingriff mit einem Geberkolben 16 einer Geberkolben/Zylindereinheit 18 ist. Der Geberzylinder 20 ist über eine Hydraulikleitung 22 mit einer Nehmerkolben/Zylindereinheiit 24 verbunden, deren Nehmerkolben 26 eine in ihrem Auf-bau an sich bekannte Kupplung 28 betätigt, wobei die Kupplung durch den Nehmerkolben 26 zugedrückt wird, d. h. in Eingriff gedrückt wird. In der Kupplung sind allenfalls schwache Rückholfedern (nicht dargestellt) angeordnet, die die Kupplung 28 außer Eingriff drängen, wobei der Öffnungshub der Kupplung durch einen am Zylinder 30 der Nehmerkolben/Zylindereinheit 24 ausgebildeten Anschlag 32 begrenzt ist.

Der Geberzylinder 20 ist mit einer Schnüffelbohrung 34 ausgebildet, die zu einem Hydraulikmittelreservoir 36 führt. Die Bewegung des Geberkolbens 16 gemäß Fig. 1 nach rechts wird von einer Kompensationsfeder 38 unterstützt, die sich zwischen einem ortsfesten Anschlag 40 und dem Geberkolben 16 abstützt.

Die Drehung der Spindel 14 wird von einem Inkrementalsensor 42 erfasst, der mit einem Eingang eines elektronischen Steuergerätes 44 verbunden ist. Der Betrieb des Elektromotors 10 wird über Ausgänge des Steuergerätes 44 gesteuert. Ein weiterer Eingang des Steuergerätes 44 erfasst die Leistungsaufnahme des Elektromotors 10.

Das Steuergerät 44 enthält einen Mikrocomputer und Speichereinrichtungen, in denen beispielsweise die Momentenkennlinie der Kupplung 24 gespeichert ist, die das übertragbare Kupplungsmoment abhängig von der Stellung des Nehmerkolbens 26 angibt. Weitere Eingänge des Steuergerätes 44 sind mit Sensoren oder weiteren Steuergeräten verbunden, entsprechend denen der Betrieb der Kupplung gesteuert wird.

Aufbau und Funktion der beschriebenen Komponenten sind an sich bekannt und werden daher nicht näher erläutert.

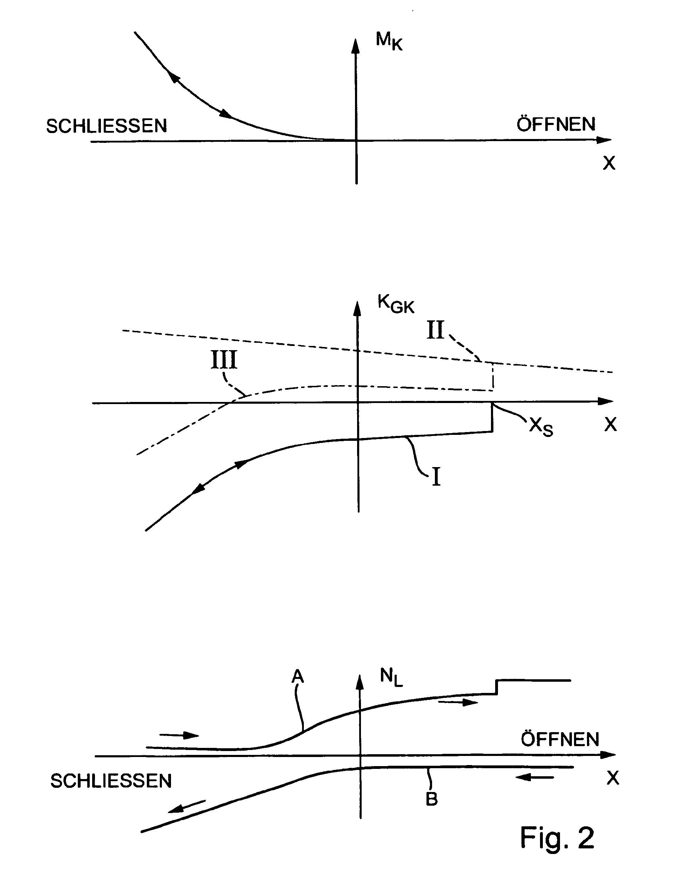

Anhand der Figur 2 wird in folgendem der Betrieb der Anordnung gemäß Figur 1 im Hinblick auf einen Abgleich des Inkrementalsensors 42 genauer erläutert:
Die drei graphischen Darstellungen der Figur 2 geben auf der Abszisse jeweils die Stellung x des Geberkolbens 16 an, wobei eine Bewegung nach rechts der Öffnung der Kupplung 28 und eine Bewegung nach links dem Schließen bzw. Einrücken der Kupplung 28 entspricht. Das oberste Diagramm zeigt auf der Ordinate das Kupplungsmoment MK. Das mittlere Diagramm zeigt auf der Ordinate die auf den Geberkolben wirksame Kraft KGK und das unterste Diagramm zeigt auf der Ordinate das Lastmoment NL des Elektromotors 10.

Bezug nehmend auf das oberste Diagramm, wird die Kupplung 28, wenn der Geberkolben 16 nach Überfahren der Schnüffelbohrung 34 gemäß Figur 1 nach rechts bewegt wird, von dem sich dann entsprechend nach links bewegenden Nehmerkolben 26 zunehmend geschlossen, wodurch ein ansteigendes Kupplungsmoment MK übertragen werden kann. Die im obersten Diagramm angegebene Kurve wird in beiden Richtungen ohne wesentliche Hysterese durchlaufen.

Wenn der Geberkolben 16 gemäß der Figur 1 nach rechts bewegt wird (dies entspricht im mittleren Diagramm der Figur 2 einer Bewegung nach links, so erfolgt diese Bewegung, solange der Geberkolben 16 links von der Schnüffelbohrung 34 ist, im wesentlichen kraftlos und, sobald der Geberkolben 16 die Schnüffelbohrung 34 überfährt (Position xS gegen die Kraft der Kupplung 28, deren Nehmerkolben 26 zunächst gegen die Öffnungsfedern der Kupplung bewegt wird und dann die Reibbeläge der Kupplung in Reibeingriff bringt. Die durchgezogene Linie im mittleren Diagramm stellt somit die von der Hydraulikstrecke her auf den Geberkolben 16 wirkende Kraft dar, die im wesentlichen unabhängig von der Bewegungsrichtung des Geberkolbens 16 ist. Dieser von der Hydraulikstrecke her wirkenden Kraft überlagert sich die Kraft der Kompensationsfeder 38, die die Bewegung des Geberkolbens 16 in Schließrichtung der Kupplung unterstützt, so dass sich als resultierende, auf den Geberkolben 16 wirkende Gesamtkraft die strichpunktierte Linie III ergibt. Um den Geberkolben 16 gegen die resultierende Kraft III zu bewegen, muss der Elektromotor 10 ein Lastmoment NL aufbringen, das von der Übersetzung des Spindeltriebs abhängt. Bei reibungsfrei und ohne Selbsthemmung ausgelegtem Spindeltrieb hat das vom Elektromotor 10 aufzubringenden Lastmoment unabhängig von der Bewegungsrichtung den Verlauf der Kurve III. Der Spindeltrieb ist jedoch vorteilhafterweise selbsthemmend ausgelegt, so dass die Kupplung 28 in ihrem geschlossenem Zustand bleibt, selbst wenn der Elektromotor 10 stromlos geschaltet wird.

Bei einer Drehrichtung der Spindel 14 derart, dass der Kolben 16 in Öffnungsrichtung bewegt wird, arbeitet der Kolben 16 in dem Bereich, in dem er die Schnüffelöffnung 34 gemäß Figur 1 nach links überfährt, gegen die Kraft der Kompensationsfeder 38, so dass sich der Kraftsprung bei xS in einem Sprung des Lastmoments NL bemerkbar macht. Der Verlauf des Lastmoments des Motors beim Öffnen der Kupplung ist im untersten Diagramm durch die Kurve A angegeben.

Beim Schließen der Kupplung (Kurve B) wird die Bewegung des Geberkolbens 16 durch die Kraft der Kompensationsfeder 38 unterstützt, so dass das von der Spindel bzw. dem Elektromotor 10 aufzubringendem Moment im Bereich des Überfahrens der Schnüffelöffnung 34 sehr klein ist und der Kraftsprung der Kurve III im wesentlichen geglättet wird.

Bei selbsthemmender Auslegung des Spindelgetriebes macht sich somit der Kraftsprung der Kurve III in einem Sprung des Lastmoments NL des Elektromotors 10 nur beim Öffnen der Kupplung bemerkbar. Dieser Momentensprung kann vom Steuergerät 44 durch eine plötzliche Änderung der Leistungsaufnahme des Elektromotors 10 erfasst werden. Der zum Zeitpunkt des Lastsprungs vorhandene Zählstand der im Steuergerät 44 ausgewerteten Impulse des Inkrementalsensors 42 kann im Moment des Lastsprungs auf Null gesetzt werden, so dass dieser Zählstand, der der Stellung des Kolbens 16 beim Überfahren der Schnüffelbohrung 34 entspricht, als Referenzwert für die weitere Steuerung des Elektromotors 10 bzw. der Kupplungsbetätigung dienen kann.

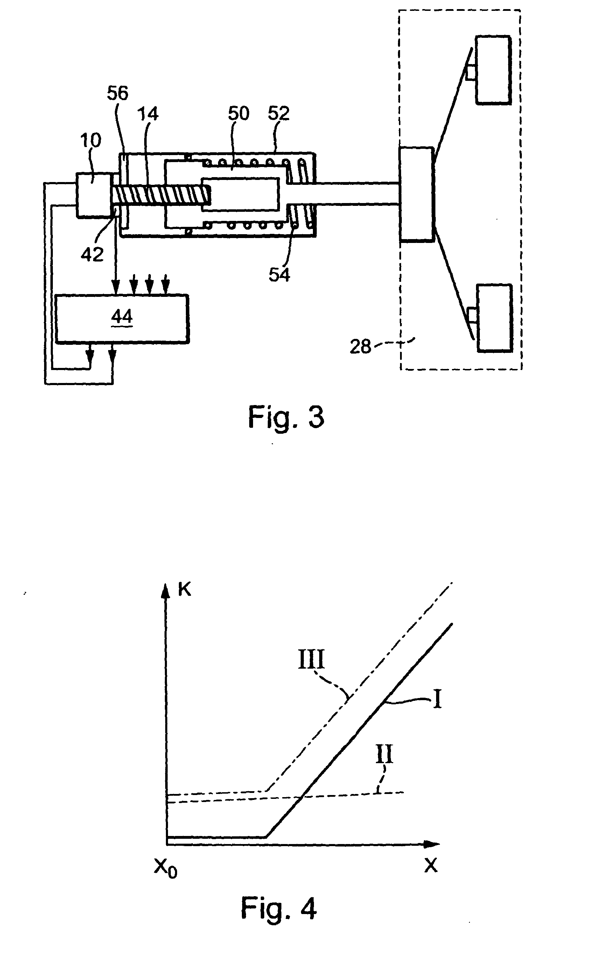

Im folgenden wird anhand der Figur 3 eine weitere Ausführungsform einer Betätigungsvorrichtung für eine zugedrückte Kupplung erläutert, wobei für der Ausführungsform gemäß Figur 1 entsprechende Teile gleiche Bezugszeichen verwendet werden.

Gemäß Figur 3 treibt ein Elektromotor 10 eine Spindel 14 an, die in Gewindeeingriff mit einem Betätigungsglied 50 ist, das in einem ortsfesten Gehäuse 52 drehfest, jedoch axial verschiebbar, aufgenommen ist. Das Betätigungsglied 50 betätigt unmittelbar die zugedrückte Kupplung 28.

Wie aus Figur 3 weiter ersichtlich, arbeitet zwischen einem Grundkörper des Betätigungsgliedes 50 und dem Gehäuse 52 eine Rückstellfeder 54, die das Betätigungsglied 50 in Richtung einer Öffnung der Kupplung 28 vorspannt. Der Gewindeeingriff zwischen der Spindel 14 und dem Betätigungsglied 50 ist im Gegensatz zur bevorzugten Ausführungsform der Figur 1 nicht selbsthemmend. Weiter ist der Elektromotor 10 derart ausgelegt, dass er im stromlosen Zustand von der Rückholfeder 54 überdrückt wird, so dass das Betätigungsglied 50 durch die Kraft der Feder 54 unter Drehung der Spindel 14 gemäß Figur 3 nach links bewegt wird, bis das Betätigungsglied 50 an einem Anschlag 56 an der Innenseite des Gehäuses 52 anliegt. Die Drehung der Spindel wird von dem Inkrementalsensor 42 erfasst.

Die Funktion der Anordnung gemäß Figur 3 wird anhand der Kraft-Weg-Kurven gemäß Figur 4 im folgenden genauer erläutert:
In Figur 4 stellt die Abszisse die Position x des Betätigungsgliedes 50 dar. Die Ordinate gibt jeweils eine Kraft K an. Die Kurve I gibt die Einrückkraft der Kupplung 28 an, wobei die Darstellung schematisch ist und die Kurve I tatsächlich als gekrümmte Linie verläuft. Die Position xO ist die Position, die das Betätigungsglied 50 einnimmt, wenn es am Anschlag 56 anliegt.

Die gestrichelte Gerade II gibt die Kraft an, mit der das Betätigungsglied 50 auf die Rückholfeder 54 drückt. Die strichpunktierte Kurve III gibt die resultierende Gesamtkraft an, mit der das Betätigungsglied 50 beim Schließen bzw. Öffnen der Kupplung 28 bewegt wird.

Wenn beim Öffnen der Kupplung der Elektromotor 10 stromlos geschaltet wird, ist die Rückholfeder 54 in Folge ihrer Vorspannung in der Lage, dass das Betätigungsglied 50 unter Drehung der Spindel 14 nach links bis zum Anschlag 56 zu bewegen. Die Drehung der Spindel 14 wird von dem Inkrementalsensor 42 erfasst und kann im Steuergerät 44 ausgewertet werden. Sobald das Betätigungsglied 50 in Anlage an den Anschlag 56 kommt, endet die Drehung der Spindel 14. Der Inkrementalsensor 42 gibt somit keine Impulse mehr ab, was im Steuergerät erkannt wird. Der Zählstand der Impulse zum Zeitpunkt des Stillstandes der Spindel 14 kann als Referenzzählstand verwendet werden, so dass mit jedem Erreichen des Anschlags 56 der Inkrementalsensor abgeglichen werden kann und die Absolutstellung des Betätigungsgliedes 50 bzw. der Kupplung 28 bekannt ist.

Die vorgenannte Abgleichstrategie ist grundsätzlich auch möglich, wenn die Kupplung 28 selbst eine genügend hohe Rückstellkraft aufbringt, um das Betätigungsglied 50 gegen den Anschlag 56 zu bewegen. Dies hat jedoch den Nachteil, dass die Kupplung selbst aufwendiger ausgebildet sein muss und die gesamte Betätigungsstrecke mit der hohen Rückstellkraft beaufschlagt ist. Außerdem müsste die in die Kupplung integrierte Rückstelleinrichtung sehr stark ausgebildet werden, um bei den sich mit Temperatur, Schwingungen, Lebensdauer usw. ändernden Wirkungsgraden und Reibungen in jeder Situation sicherzustellen, dass die Spindel bei stromlosem Elektromotor an den Anschlag gedrückt wird.

Durch die Verlagerung der Rückholfeder 54, die durch jede Art von Kraftspeicher gebildet sein kann, in den aus Elektromotor 10, Spindel 14, Gehäuse 52 und Bewegungsglied 50 bestehenden Aktor werden nur der Elektromotor und die Übersetzungsmechanik mit der Rückholfederkraft belastet.

Die schematisch in Figur 3 dargestellte Ausführungsform der Betätigungseinrichtung kann insbesondere in Doppelkupplungssystemen vorteilhaft eingesetzt werden, bei denen gewährleistet sein muss, dass die Kupplungen im Falle eines Bordnetz- oder Steuergeräteausfalls, also im stromlosen Zustand öffnen.

Die beispielhaft geschilderten Ausführungsformen können in vielfältiger Weise abgeändert werden. Anstelle eines Spindeltriebs können jeweiliger andere Zahnradtriebe verwendet werden. Der Aktor muss nicht notwendigerweise einen Elektromotor enthalten, sondern kann beispielsweise durch einen hydraulischen oder sonstigen Stellzylinder gebildet sein.

### Bezugszeichenliste

- 10: Elektromotor
- 12: Getriebe
- 14: Spindel
- 16: Geberkolben
- 18: Geberkolben/Zylindereinheit
- 20: Geberzylinder
- 22: Hydraulikleitung
- 24: Nehmerkolben/Zylindereinheit
- 26: Nehmerkolben
- 28: Kupplung
- 30: Zylinder
- 32: Anschlag
- 34: Schnüffelbohrung
- 36: Hydraulikmittelreservoir
- 38: Kompensationsfeder
- 40: Anschlag
- 42: Inkrementalsensor
- 44: Steuergerät
- 50: Betätigungsglied
- 52: Gehäuse
- 54: Rückholfeder
- 56: Anschlag

## Patentansprüche

1. Verfahren zum Abgleichen einer Inkrementalwegmesseinrichtung in einer Betätigungsvorrichtung einer zugedrückten Kupplung, wobei die Betätigungsvorrichtung einen Aktor (10, 12, 14) enthält, dessen Stellung von einem Inkrementalsensor (42) erfasst wird und der mit einem Geberkolben (16) verbunden ist, der über eine Hydraulikstrecke (22) mit geberkolbenseitiger Schnüffelbohrung (34) mit einem Nehmerkolben (26) verbunden ist, der die Kupplung (28) betätigt, welches Verfahren folgende Schritte enthält:
Erfassen der Kraft, die der Aktor (10, 12, 14) zum Bewegen des Geberkolbens (16) benötigt,
Erfassen des Ausgangssignals des Inkrementalsensors (42) zu dem Zeitpunkt, zu dem sich die Kraft bei Überfahren der Schnüffelbohrung (34) durch den Geberkolben (16) sprunghaft ändert und
Festlegen des Ausgangssignals des Inkrementalsensors (42) zum Zeitpunkt der sprunghaften Änderung als neues Referenzsignal.

2. Verfahren nach Anspruch 1, wobei die Betätigungseinrichtung einen Elektromotor (10) enthält, der mit dem Geberkolben über einen selbsthemmenden Spindeltrieb (14) verbunden ist und die Bewegung des Geberkolbens (16) in Schließrichtung der Kupplung (28) von einer Kompensationsfeder (38) unterstützt wird, bei welchem Verfahren die sprunghafte Änderung der Kraft nur bei einer Bewegung des Geberkolbens in Öffnungsrichtung der Kupplung (24) erfasst wird.

3. Betätigungsvorrichtung für eine zugedrückte Kupplung, enthaltend
einen Elektromotor (10) zum Bewegen eines Geberkolbens (16), der über eine Hydraulikstrecke (22) mit geberkolbenseitiger Schnüffelbohrung (34) mit einem Nehmerkolben (26) verbunden ist, der, die Kupplung (28) betätigt,
einen selbsthemmenden Spindeltrieb (14) zum Umwandeln einer Drehung der von dem Elektromotor angetriebenen Spindel (14) in eine lineare Bewegung des Geberkolbens (16),
einen Inkrementalsensor (42) zum Erfassen der Drehung der Spindel,
eine Kompensationsfeder (38), die eine Bewegung des Geberkolbens in Schließrichtung der Kupplung unterstützt,
eine Steuereinrichtung (44), die die Leistungsaufnahme des Elektromotors (10) beim Bewegen des Geberkolbens (16) erfasst, mit dem Inkrementalsensor (42) verbunden ist und eine Speichereinrichtung aufweist, die das Signal des Inkrementalsensors bei einer sprunghaften Änderung der Leistungsaufnahme, wenn der Geberkolben (16) die Schnüffelborung (34) überführt, als Referenzsignal speichert.

4. Betätigungsvorrichtung nach Anspruch 3, wobei die zugedrückte Kupplung (28) in Öffnungsrichtung vorgespannt ist und der Öffnungshub der Kupplung durch einen Anschlag (32) begrenzt ist.

5. Verfahren zum Abgleichen einer Inkrementalwegmesseinrichtung in einer Betätigungsvorrichtung einer zugedrückten Kupplung, wobei die Betätigungsvorrichtung einen mit Leistung beaufschlagbaren Aktor (10, 12, 14) enthält, dessen Stellung von einem Inkrementalsensor (42) erfasst wird und der mit einem Betätigungsglied (50) für die Kupplung verbunden ist, wobei das Betätigungsglied (50) von einer Vorspanneinrichtung (52) derart in Öffnungsrichtung der Kupplung vorgespannt ist, dass es bei leistungslosem Aktor in Anlage an einen ortsfesten Anschlag (56) gedrängt wird, welches Verfahren folgende Schritte enthält:
Leistungslos Schalten des Aktors (10, 12,14),
Erfassen des Stehenbleibens des Betätigungsgliedes (50) und
Festlegen des Ausgangssignals des Inkrementalsensors (42) zum Zeitpunkt des Stehenbleibens des Betätigungsgliedes als neues Referenzsignal.

6. Verfahren nach Anspruch 5, wobei der Aktor ein Elektromotor (10) ist, der eine Spindel (14) antreibt, die mit dem Betätigungsglied (50) in nichthemmendem Gewindeeingriff ist, und der Inkrementalsensor (42) die Drehung der Spindel erfasst.

7. Betätigungsvorrichtung für eine zugedrückte Kupplung, enthaltend
einen Elektromotor (10) zum Drehantreiben einer Spindel (14),
ein Betätigungsglied (50) zum Betätigen der Kupplung (28), das mit der Spindel in nichthemmenden Gewindeeingriff ist,
einen Inkrementalsensor (42) zum Erfassen der Drehung der Spindel (14),
eine Vorspanneinrichtung (52), die das Betätigungsglied derart in Öffnungsrichtung der Kupplung vorspannt, dass es sich bei stromlosem Motor unter Drehung der Spindel gegen einen ortsfesten Anschlag (56) bewegt, und
eine Steuereinrichtung (44), die den Elektromotor steuert, mit dem Inkrementalsensor verbunden ist und eine Speichereinrichtung aufweist, die das Signal des Inkrementalsensors bei stromlosem Elektromotor und einen Stillstand der Spindel erfassenden Inkrementalsensor als Referenzsignal speichert.

## Claims

1. Method for calibrating an incremental displacement measuring device in an actuating device of a clutch being normally open, wherein the actuating device contains an actuator (10, 12, 14) whose position is sensed by an incremental sensor (42) and which is connected to a master piston (16) which is connected via a hydraulic section (22) with a master-piston-side snifting bore (34) to a slave piston (26) which actuates the clutch (28), which method contains the following steps:
sensing of that force which the actuator (10, 12, 14) requires to move the master piston (16),
sensing of the output signal of the incremental sensor (42) at the point in time at which the force changes in a step-like manner when the master piston (16) travels over the snifting bore (34), and
definition of the output signal of the incremental sensor (42) at the point in time of the step-like manner change as a new reference signal.

2. Method according to Claim 1, wherein the actuating device contains an electric motor (10) which is connected to the master piston via a self-locking spindle drive (14), and wherein the movement of the master piston (16) in the closing direction of the clutch (28) is assisted by a compensation spring (38), in which method the step-like manner change in the force is sensed only when the master piston moves in the opening direction of the clutch (24).

3. Actuation device for a clutch which is normally open, containing
an electric motor (10) for moving a master piston (16) which is connected via a hydraulic section (22) with a master-piston-side snifting bore (34) to a slave piston (26) which actuates the clutch (28),
a self-locking spindle drive (14) for converting a rotation of the spindle (14) which is driven by the electric motor into a linear movement of the master piston (16),
an incremental sensor (42) for sensing the rotation of the spindle,
a compensation spring (38) which assists a movement of the master piston in the closing direction of the clutch,
a control device (44), which senses the power consumption of the electric motor (10) when the master piston (16) moves, which is connected to the incremental sensor (42) and which has a memory which stores the signal of the incremental sensor as a reference signal if there is a step-like manner change in the power consumption when the master piston (16) travels over the snifting bore (34).

4. Actuation device according to Claim 3, wherein the clutch (28) which is normally open is pre-loaded in the opening direction, and the opening stroke of the clutch is limited by a stop (32).

5. Method for calibrating an incremental displacement measuring device in an actuation device of a clutch which is normally open, wherein the actuation device contains an actuator (10, 12, 14) to which power can be applied and whose position is sensed by an incremental sensor (42) and which is connected to an actuation element (50) for the clutch, wherein the actuation element (50) is pre-loaded by a pre-loading device (52) in the opening direction of the clutch in such a way that when the actuator is not energized said actuation element is forced into abutment against a fixed stop (56), which method contains the following steps:
switching of the actuator (10, 12, 14) in a non-energized state,
sensing when the actuating element (50) has stopped, and
definition of the output signal of the incremental sensor (42) at the point in time when the actuation element stops as a new reference signal.

6. Method according to Claim 5, wherein the actuator is an electric motor (10) which drives a spindle (14) which is in non-locking threaded engagement with the actuation element (50), and the incremental sensor (42) senses the rotation of the spindle.

7. Actuation device for a clutch which is normally open, containing
an electric motor (10) for rotationally driving a spindle (14),
an actuation element (50) for actuating the clutch (28) which is in non-locking threaded engagement with the spindle, an incremental sensor (42) for sensing the rotation of the spindle (14),
a pre-loading device (52) which pre-loads the actuating element in the opening direction of the clutch in such a way that when the motor is currentless said actuation element moves against a fixed stop (56) accompanied by rotation of the spindle, and
a control device (44), which controls the electric motor, which is connected to the incremental sensor and which has a memory which stores the signal of the incremental sensor when the electric motor is currentless and when the incremental sensor senses a stationary state of the spindle as a reference signal.

## Revendications

1. Procédé pour ajuster un dispositif de mesure de course incrémentale dans un dispositif d'actionnement d'un accouplement normalement ouvert, le dispositif d'actionnement comprenant un actionneur (10, 12, 14) dont la position est détectée par un capteur incrémental (42) et qui est relié avec un piston transmetteur (16), lequel est relié par le biais d'un tronçon hydraulique (22) muni d'un reniflard (34) côté piston transmetteur avec un piston récepteur (26) qui actionne l'accouplement (28), ledit procédé comprenant les étapes suivantes :
détection de la force requise par l'actionneur (10, 12, 14) pour déplacer le piston transmetteur (16),
détection du signal de sortie du capteur incrémental (42) à l'instant où la force est modifiée sous forme de saut lorsque le piston transmetteur (16) croise le reniflard (34) et
adoption du signal de sortie du capteur incrémental (42) à l'instant de la modification sous forme de saut en tant que nouveau signal de référence.

2. Procédé selon la revendication 1, le dispositif d'actionnement comprenant un moteur électrique (10) qui est relié avec le piston transmetteur par le biais d'une transmission à broche (14) autobloquante et le mouvement du piston transmetteur (16) dans le sens de la fermeture de l'accouplement (28) étant assisté par un ressort de compensation (38), procédé avec lequel la modification sous forme de saut de la force est uniquement détectée lors d'un mouvement du piston transmetteur dans le sens de l'ouverture de l'accouplement (24).

3. Dispositif d'actionnement pour un accouplement normalement ouvert, comprenant
un moteur électrique (10) pour déplacer un piston transmetteur (16), lequel est relié par le biais d'un tronçon hydraulique (22) muni d'un reniflard (34) côté piston transmetteur avec un piston récepteur (26) qui actionne l'accouplement (28),
une transmission à broche (14) autobloquante destinée à convertir une rotation de la broche (14) entraînée par le moteur électrique en un mouvement linéaire du piston transmetteur (16),
un capteur incrémental (42) pour détecter la rotation de la broche,
un ressort de compensation (38) qui assiste un mouvement du piston transmetteur dans le sens de la fermeture de l'accouplement,
un dispositif de commande (44) qui détecte la puissance consommée par le moteur électrique (10) lors du mouvement du piston transmetteur (16), avec lequel est relié le capteur incrémental (42) et qui présente un dispositif de mémorisation qui enregistre le signal du capteur incrémental lors d'une modification sous forme de saut de la puissance consommée, lorsque le piston transmetteur (16) croise le reniflard (34), en tant que signal de référence.

4. Dispositif d'actionnement selon la revendication 3, l'accouplement normalement ouvert (28) étant précontraint dans le sens de l'ouverture et la course d'ouverture de l'accouplement étant limitée par une butée (32).

5. Procédé pour ajuster un dispositif de mesure de course incrémentale dans un dispositif d'actionnement d'un accouplement normalement ouvert, le dispositif d'actionnement comprenant un actionneur (10, 12, 14) pouvant être exposé à une puissance dont la position est détectée par un capteur incrémental (42) et qui est relié avec un élément d'actionnement (50) pour l'accouplement, l'élément d'actionnement (50) étant précontraint par un dispositif de précontrainte (52) dans le sens de l'ouverture de l'accouplement de telle sorte que lorsque l'actionneur n'est pas énergisé, il est appliqué contre une butée fixe (56), ledit procédé comprenant les étapes suivantes :
désénergisation de l'actionneur (10, 12, 14),
détection de l'immobilisation de l'élément d'actionnement (50) et
adoption du signal de sortie du capteur incrémental (42) au moment de l'immobilisation de l'élément d'actionnement en tant que nouveau signal de référence.

6. Procédé selon la revendication 5, l'actionneur étant un moteur électrique (10) qui entraîne une broche (14), laquelle est en prise non bloquante avec l'élément d'actionnement (50) par l'intermédiaire d'un filet, et le capteur incrémental (42) détectant la rotation de la broche.

7. Dispositif d'actionnement pour un accouplement fermé par compression, comprenant
un moteur électrique (10) pour l'entraînement rotatif d'une broche (14),
un élément d'actionnement (50) pour actionner l'accouplement (28) qui est en prise non bloquante avec la broche par l'intermédiaire d'un filet,
un capteur incrémental (42) pour détecter la rotation de la broche (14),
un dispositif de précontrainte (52) qui précontraint l'élément d'actionnement dans le sens de l'ouverture de l'accouplement de telle sorte que lorsque le moteur n'est pas sous tension, il est déplacé contre une butée fixe (56) en faisant tourner la broche et
un dispositif de commande (44) qui commande le moteur électrique, qui est relié avec le capteur incrémental et présente un dispositif de mémorisation qui enregistre le signal du capteur incrémental en tant que signal de référence lorsque le moteur électrique est hors tension et lorsque le capteur incrémental détecte une immobilisation de la broche.
